(19) Europäisches Patentamt

European Patent Office

Office européen des brevets

(11) **EP 4 044 127 A2**

(12) **EUROPEAN PATENT APPLICATION**

(43) Date of publication:
**17.08.2022 Bulletin 2022/33**

(21) Application number: **22159079.7**

(22) Date of filing: **28.02.2022**

(51) International Patent Classification (IPC):
**G06V 10/82** $^{(2022.01)}$

(52) Cooperative Patent Classification (CPC):
**G06T 11/203; G06V 10/82**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021 CN 202111057881**

(71) Applicant: **Beijing Baidu Netcom Science and Technology Co., Ltd. Beijing 100085 (CN)**

(72) Inventors:
- **LIU, Jiaming BEIJING, 100085 (CN)**
- **TANG, Licheng BEIJING, 100085 (CN)**

(74) Representative: **Regimbeau 20, rue de Chazelles 75847 Paris Cedex 17 (FR)**

(54) **MODEL TRAINING METHOD AND APPARATUS, FONT LIBRARY ESTABLISHMENT METHOD AND APPARATUS, DEVICE AND STORAGE MEDIUM**

(57)     A method for training a font generation model is described below. A source domain sample character and a target domain association character are input into a font generation network to obtain a target domain generation character (S201). The target domain generation character and at least one of a target domain sample character or the target domain association character are input into a loss analysis network to obtain a first loss, and a parameter of the font generation model is adjusted according to the first loss (S202). The source domain sample character and a random vector are input into the font generation network to obtain a random domain generation character (S203). The random domain generation character and a random domain sample character are input into the loss analysis network to obtain a second loss, and the parameter is readjusted according to the second loss (S204).

Input a source domain sample character and a target domain association character of the source domain sample character into a font generation network of the font generation model to obtain a target domain generation character ⌐S201

Input the target domain generation character and at least one of a target domain sample character or the target domain association character into the loss analysis network of the font generation model to obtain a first loss, and adjust a parameter of the font generation model according to the first loss ⌐S202

Input the source domain sample character and a random vector into the font generation network to obtain a random domain generation character ⌐S203

Input the random domain generation character and a random domain sample character into the loss analysis network to obtain a second loss, and readjust the parameter of the font generation model according to the second loss ⌐S204

**FIG. 2A**

## Description

TECHNICAL FIELD

The present disclosure relates to the technical field of artificial intelligence, in particular, to the technical field of computer vision and deep learning, and may be applied to optical character recognition (OCR) and other scenes.

BACKGROUND

With the development of the Internet and the increase of people's individual requirements, the generation of custom style fonts has gradually emerged.

The process of font generation is essentially the process of image style transfer, that is, an image is converted into an image of another style while the content is kept unchanged. For example, the character "你" of the standard regular script style is converted into the character "你" of the user handwriting style.

SUMMARY

The present disclosure provides a model training method and apparatus, a font library establishment method and apparatus, a device and a storage medium.

According to an aspect of the present disclosure, a method for training a font generation model is provided. The method includes steps described below.

A source domain sample character and a target domain association character of the source domain sample character are input into a font generation network of the font generation model to obtain a target domain generation character.

The target domain generation character and at least one of a target domain sample character or the target domain association character are input into a loss analysis network of the font generation model to obtain a first loss, and a parameter of the font generation model is adjusted according to the first loss.

The source domain sample character and a random vector are input into the font generation network to obtain a random domain generation character.

The random domain generation character and a random domain sample character are input into the loss analysis network to obtain a second loss, and the parameter of the font generation model is readjusted according to the second loss.

According to another aspect of the present disclosure, a method for establishing a font library is provided. The method includes steps described below.

A source domain input character is input into a font generation model to obtain a target domain new character.

The font library is established based on the target domain new character.

The font generation model is obtained by training according to the method for training a font generation model of any embodiment of the present disclosure.

According to another aspect of the present disclosure, an electronic device is provided. The electronic device includes at least one processor and a memory communicatively connected to the at least one processor.

The memory stores instructions executable by the at least one processor, and the instructions are executed by the at least one processor to cause the at least one processor to perform the method for training a font generation model and/or the method for establishing a font library of any embodiment of the present disclosure.

According to another aspect of the present disclosure, a computer-readable storage medium is provided. The storage medium stores computer instructions for causing a computer to perform the method for training a font generation model and/or the method for establishing a font library of any embodiment of the present disclosure.

The technology of the present disclosure provides a new idea for training a font generation model with a small amount of sample data, and the accuracy and generalization of model training are improved.

It is to be understood that the content described in this part is neither intended to identify key or important features of embodiments of the present disclosure nor intended to limit the scope of the present disclosure. Other features of the present disclosure are apparent from the description provided hereinafter.

BRIEF DESCRIPTION OF DRAWINGS

The drawings are intended to provide a better understanding of the solution and not to limit the present disclosure.

FIG. 1 is a schematic diagram of an exemplary system architecture to which a method for training a font generation model and/or a method for establishing a font library may be applied according to an embodiment of the present disclosure;

FIG. 2A is a flowchart of a method for training a font generation model according to an embodiment of the present disclosure;

FIG. 2B is a structural diagram of a font generation model according to an embodiment of the present disclosure;

FIG. 3 is a structural diagram of another font generation model according to an embodiment of the present disclosure;

FIG. 4 is a flowchart of another method for training a font generation model according to an embodiment of the present disclosure;

FIG. 5 is a flowchart of another method for training a font generation model according to an embodiment of the present disclosure;

FIG. 6 is a flowchart of a method for establishing a font library according to an embodiment of the present disclosure;

FIG. 7 is a structural diagram of an apparatus for training a font generation model according to an embodiment of the present disclosure;

FIG. 8 is a structural diagram of an apparatus for establishing a font library according to an embodiment of the present disclosure; and

FIG. 9 is a block diagram of an electronic device for implementing a method for training a font generation model and/or a method for establishing a font library according to an embodiment of the present disclosure.

DETAILED DESCRIPTION

Example embodiments of the present disclosure, including details of embodiments of the present disclosure, are described hereinafter in conjunction with the drawings to facilitate understanding. The example embodiments are merely illustrative. Font generation is an emerging task in the field of image style transfer. Image style transfer refers to the conversion of an image into an image of another style while the content is kept unchanged. Image style transfer is a popular research direction in deep learning applications.

At present, generative adversarial network (GAN) models may be adopted to implement font generation. However, in font generation schemes based on the GAN models, through the network trained with a relatively small amount of data, only some relatively weak features, such as tilt, size and part of strokes, can be learned, while the most user-style features cannot be learned. The network trained with a relatively large amount of data may also be used. Through this kind of network, however, although the learned style can be relatively strong, incorrect characters are easy to generate for Chinese characters outside the training set. According to these mainstream research results, font-level effect is difficult to achieve.

Embodiments of the present disclosure provide a method for training a font generation model and a method for establishing a font library using the font generation model. During the process of training the font generation model to perform the task of font style transfer between a source domain and a target domain, the training of the transfer from the source domain to a random style font is introduced, that is, a random training branch is added, so that the capability of the font generation model to perform font style transfer is improved. When a small amount of target domain sample data is provided, or the source domain font does not conform to the font distribution style, the beautiful and correct font still can be generated, so that the accuracy and generalization of the model are improved.

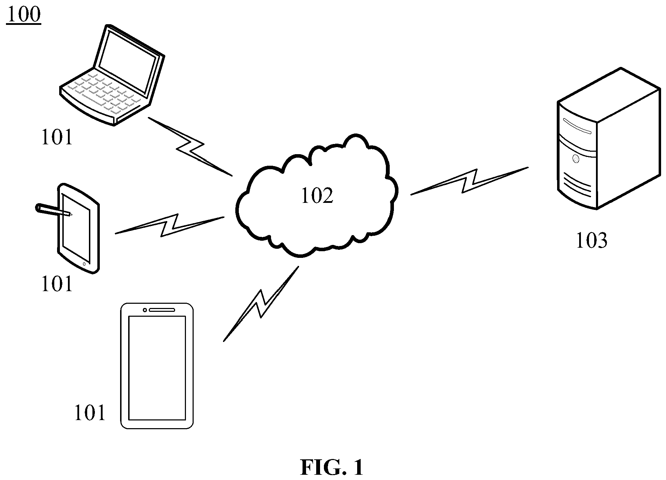

FIG. 1 is a schematic diagram of an exemplary system architecture to which a method for training a font generation model and/or a method for establishing a font library may be applied according to an embodiment of the present disclosure. It should be noted that FIG. 1 is merely an example of a system architecture to which the embodiment of the present disclosure may be applied to help those skilled in the art understand the technical content of the present disclosure, and it does not mean that the embodiment of the present disclosure may not be used in other devices, systems, environments or scenes.

As shown in FIG. 1, the system architecture 100 according to the embodiment may include multiple terminal devices 101, a network 102 and a server 103. The network 102 is configured to provide a medium of a communication link between the terminal devices 101 and the server 103. The network 102 may include various connection types, such as wired and/or wireless communication links and the like.

A user may use a terminal device 101 to interact with the server 103 through the network 102 to receive or send messages and the like. The terminal devices 101 may be various electronic devices, including but not limited to smart phones, tablet computers, laptop portable computers and the like.

The method for training a font generation model and/or a method for establishing a font library provided by the embodiment of the present disclosure may generally be performed by the server 103. Correspondingly, an apparatus for training a font generation model and/or an apparatus for establishing a font library provided by the embodiment of the present disclosure may generally be disposed in the server 103. The method for training a font generation model and/or the method for establishing a font library provided by the embodiment of the present disclosure may also be performed by a server or a server cluster that is different from the server 103 and capable of communicating with the terminal devices 101 and/or the server 103. Correspondingly, the apparatus for training a font generation model and/or the apparatus for establishing a font library provided by the embodiment of the present disclosure may also be disposed in a server or a server cluster that is different from the server 103 and capable of communicating with the terminal devices 101 and/or the server 103.

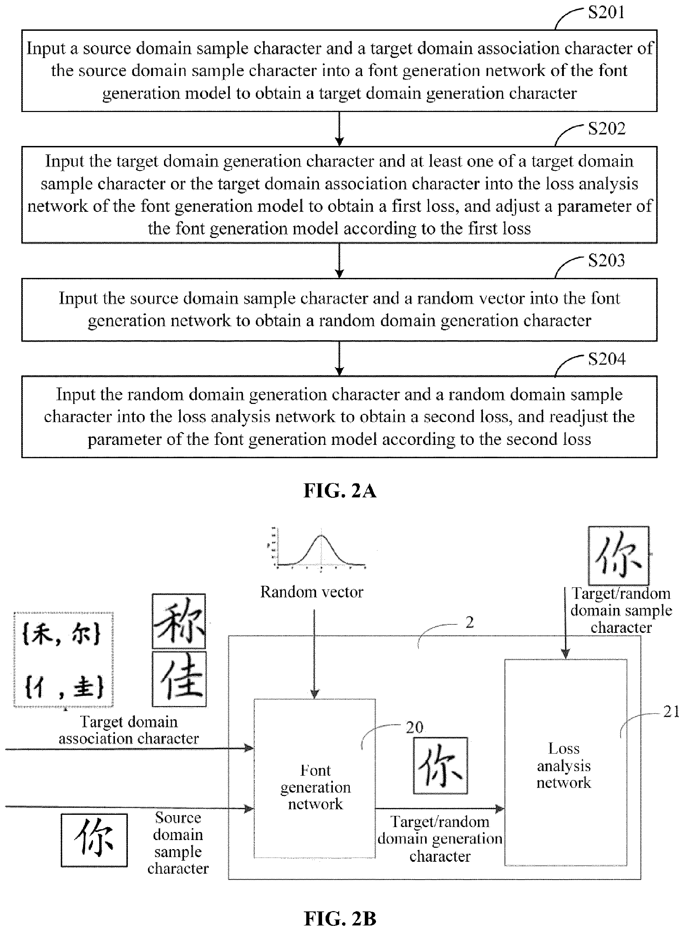

FIG. 2A is a flowchart of a method for training a font generation model according to an embodiment of the present disclosure, and FIG. 2B is a structural diagram of a font generation model according to an embodiment of the present disclosure. The embodiment of the present disclosure is applicable to the case of training a font generation model for performing the task of font style transfer, and in particular, to the case of training a font generation model for performing the task of font style transfer based on a small amount of sample data. The method may be performed by an apparatus for training a font generation model. The apparatus may be implemented by means of software and/or hardware. As shown in FIGS. 2A to 2B, the method for training a font generation model provided by the embodiment may include steps described below.

In step S201, a source domain sample character and a target domain association character of the source domain sample character are input into a font generation network of the font generation model to obtain a target domain generation character.

The source domain sample character may be an image having the source domain font style, and the source domain style font may be regular fonts such as regular script, Song or bold. The target domain association character may be an image having the target domain font style and capable of covering radicals of the source domain sample character. The target domain font style may be the user handwriting font style or other artistic font styles. It should be noted that the number of target domain association characters in the embodiment may be one or more, preferably more. The target domain generation character may be an image generated by the font generation model and having the content of the source domain sample character and the font style of the target domain association character. For example, if the source domain sample character is "你 你", corresponding radicals include "亻" and "尔", and the target domain association character may be images of all characters having the target domain font style and containing "亻 亻" or "尔 尔" such as "称" and "佳". The target domain generation character may be the character "你 你" having the target domain font style.

As shown in FIG. 2B, the font generation model 2 of the embodiment of the present disclosure is a neural network model that transfers the source domain sample character from the source domain style font to the target domain style font. The character generation model 2 may include a font generation network 20 and a loss analysis network 21. The font generation network 20 is configured to perform the task of font style transfer, that is, the font generation network 20 is a backbone network of the font generation model. The loss analysis network 21 is configured in a model training stage to calculate a loss function of the model during the training process, so that the model performs parameter adjustment based on the loss function.

Specifically, in the embodiment, when one time of iterative training task is performed, a batch of target domain association characters covering the radical of the source domain sample character may be obtained based on the source domain sample character, then the source domain sample character and the target domain association characters are input into the font generation network 20 of the font generation model 2, and the font generation network 20 transfers the font style of the source domain sample character from the source domain font style to the target domain font style based on the input source domain sample character and the input target domain association characters, so as to obtain the target domain generation character. As shown in FIG. 2B, the character "你 你" of the Song style (that is, the source domain sample character) and the characters "称 称" and "佳 佳" of the handwriting style (that is, the target domain association characters) are input into the font generation network 20 of the font generation model 2 to obtain the character "你 你" of the handwriting style (that is, the target domain generation character).

In step S202, the target domain generation character and at least one of a target domain sample character or the target domain association character are input into the loss analysis network of the font generation model to obtain a first loss, and a parameter of the font generation model is adjusted according to the first loss.

The target domain sample character may be an actual image having the content of the source domain sample character and the font style of the target domain association character. The target domain sample character is the standard character corresponding to the target domain generation character. For example, if the source domain sample character is "你 你" and the target domain font is the user handwriting style font, the target domain sample character may be the character "你 你" actually handwritten by the user. The target domain generation character is the user's handwritten character "你 你" predicted by the font generation model. The first loss is the loss function calculated during model training based on the target domain association character and the source domain sample character in step S201.

The loss analysis network of the font generation model of the embodiment may include at least one subnetwork that analyzes at least one type of loss function, that is, the first loss determined based on the loss analysis network may include at least one type of loss function value. For example, the loss analysis network of the font generation model may analyze the consistency of the character content of the target domain sample character and the character content of the target domain generation character to generate a character classification loss, analyze the consistency of the font style of the target domain sample character and the font style of the target domain generation character to generate a style classification loss, analyze the consistency of the radical (that is, components) of the target domain association character and the radical of the target domain generation character to generate a component classification loss, analyze whether the target domain generation character is an incorrect character to generate an incorrect character loss, etc. In the embodiment, after the first loss is calculated through the loss analysis network, parameter values of the font generation network and the loss analysis network of the font generation model are adjusted based on the first loss. At this time, the first stage of training of the one time of iterative training task, that is, target branch training, is completed.

In step S203, the source domain sample character and a random vector are input into the font generation network to obtain a random domain generation character.

The random vector may be a random vector randomly sampled according to a normal distribution. The random vector corresponds to the style font of a random domain. The dimension of the random vector may be preset. The random domain generation character may be an image having the content of the source domain sample character and the font style of the random domain corresponding to the random vector.

In the embodiment, for the one time of iterative training task, after the first stage of training of S201 to S202 is completed, it is necessary to further perform the second stage of training, that is, random branch training, on the model based on the source domain sample character and the randomly sampled random vector. Specifically, the source domain sample character and the random vector are input into the font generation network 20 of the font generation model 2, and the font generation network 20 transfers the font style of the source domain sample character from the source domain font style to the font style of the random domain corresponding to the random vector based on the input source domain sample character and the input random vector, so as to obtain the random domain generation character.

In step S204, the random domain generation character and a random domain sample character are input into the loss analysis network to obtain a second loss, and the parameter of the font generation model is readjusted according to the second loss.

The random domain sample character may be an actual image having the content of the source domain sample character and the random domain font style. The random domain sample character is the standard character corresponding to the random domain generation character. The second loss is the loss function calculated during model training based on the random vector and the source domain sample character in step S203. The first loss may be the same as or different from the second loss.

Since the font style is random during the training in step S203, the loss analysis network cannot determine whether the transfer of the style is correct. Therefore, when performing this step to generate the second loss, the loss analysis network may consider the character content. For example, whether the character content of the random domain generation character is consistent with the character content of the random domain sample character may be analyzed to generate a character classification loss; an incorrect character loss of whether the random domain generation character is an incorrect character may be analyzed; etc. In the embodiment, after the second loss is calculated through the loss analysis network, parameter values of the font generation network and the loss analysis network of the font generation model are adjusted based on the second loss. At this time, the second stage of training of the one time of iterative training task, that is, the random branch training, is completed.

It should be noted that in the solution of the embodiment of the present disclosure, multiple times of iterative training needs to be performed on the model based on multiple groups of source domain sample characters. Specifically, when one time of iterative training is performed on the font generation model for each group of source domain sample characters, two stages of training, that is, the target branch (that is, steps S201 to S202) and the random branch (that is, steps S203 to S204), are performed. Multiple times of iterative training are performed until a preset training stopping condition is reached. At this time, the adjustment of the parameter of the font generation model is stopped, and a trained font generation model is obtained. The training stopping condition may include conditions below. The number of times of training reaches a preset number, or the preceding first loss and/or second loss converge.

It should further be noted that the character (such as the source domain sample character, the target domain association character, the target domain sample character and the random domain sample character) input into the font generation model may be input in the form of an image, and the image corresponding to the character input into the font generation model may be from a public data set or obtained after relevant authorization.

In the solution of the embodiment of the present disclosure, one time of iterative training performed on a font generation model includes a target branch training stage performed on the model based on a source domain sample character and a target domain association character and a random branch training stage performed on the model based on the source domain sample character and a random vector. The random branch training stage is introduced, so that the capability of the font generation model to perform font style transfer is improved. When a small amount of target domain sample data is provided, or the source domain font does not conform to the font distribution style, the beautiful and correct font still can be generated, so that the accuracy and generalization of the model are improved. In this way, a new idea is provided for training a font generation model with a small amount of sample data.

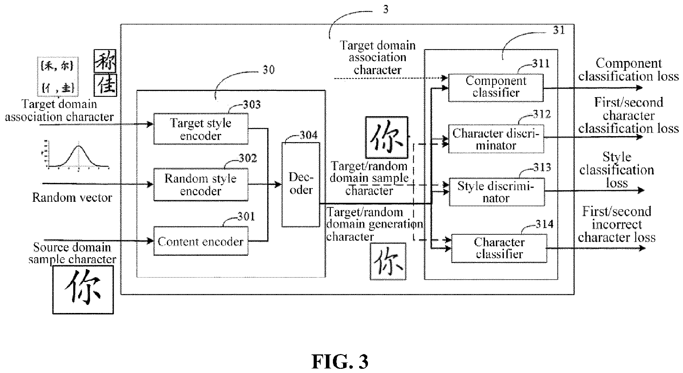

FIG. 3 is a structural diagram of another font generation model according to an embodiment of the present disclosure. As shown in FIG. 3, the font generation network 30 of the font generation model 3 of the embodiment of the present disclosure includes: a content encoder 301, a random style encoder 302, a target style encoder 303 and a decoder 304. The content encoder 301 is configured to encode the content feature of a source domain sample character, the random style encoder 302 is configured to encode the style feature of a random vector, and the target style encoder 303 is configured to encode the style feature of a target domain association character. Optionally, each of the preceding encoders may include a multilayer perceptual network consisting of multiple fully connected layers connected end to end. The network layer design of the multilayer perceptual network of each encoder may be the same or different. The decoder 304 is configured to decode to obtain a style-transferred generation character based on the feature encoded by each encoder. Each of the preceding encoders of the embodiment is connected to the decoder 304.

In the embodiment, the style encoder of the font generation model not only includes a target style encoder with a to-be-transferred target style, but also includes a random style encoder with a random style. In this way, model training stages are supported, and the impact of random style fonts on the model training is introduced, so that the capability of the font generation model to perform font style transfer is improved, and the accuracy and generalization of the model are improved.

In the embodiment of the present disclosure, the loss analysis network 31 of the font generation model 3 includes at least one of a component classifier 311, a character discriminator 312, a style discriminator 313 or a character classifier 314. The component classifier 311 is configured to calculate a component classification loss, the character discriminator 312 is configured to calculate a character classification loss, the style discriminator 313 is configured to calculate a style classification loss, and the character classifier 314 is configured to calculate an incorrect character loss. Therefore, in the embodiment, the first loss includes at least one of a component classification loss, a first character classification loss, a style classification loss or a first incorrect character loss. The second loss includes a second character classification loss and/or a second incorrect character loss. The process of how to calculate each of the preceding losses will be described in detail in the following embodiments.

In the embodiment, the loss analysis network may include multiple network structures for calculating different types of losses. In this way, the model is trained through multiple different types of losses, so that the accuracy of model training results can be greatly improved.

Next, based on the font generation model shown in FIG. 3, the method for training the font generation model is described in detail below.

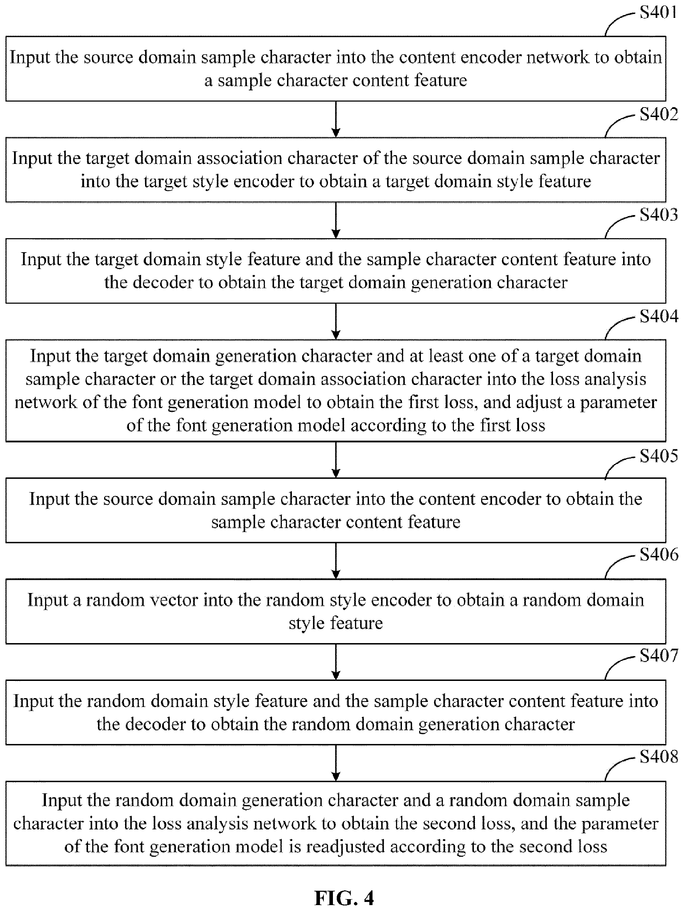

FIG. 4 is a flowchart of another method for training a font generation model according to an embodiment of the present disclosure. Based on the preceding embodiments, the embodiment of the present disclosure further explains in detail the process of how to obtain the target domain generation character and the random domain generation character. As shown in FIGS. 3 to 4, the method for training a font generation model provided by the embodiment may include steps described below.

In step S401, the source domain sample character is input into the content encoder to obtain a sample character content feature.

The sample character content feature may be a feature that characterizes the content (for example, a character type and a component type) of the source domain sample character.

Exemplarily, as shown in FIG. 3, the source domain sample character (such as the character "你 你 " of the Song style) is input into the content encoder 301 of the font generation network 30 of the font generation model 3, and the content encoder 301 encodes the content of the input source domain sample character to obtain the sample character content feature.

In step S402, the target domain association character of the source domain sample character is input into the target style encoder to obtain a target domain style feature.

The target domain style feature may be a feature that characterizes the font style of the target domain.

Exemplarily, as shown in FIG. 3, the target domain association character (such as the characters "称 称 " and "佳 佳 " of the handwriting style) of the source domain sample character is input into the target style encoder 303 of the font generation network 30 of the font generation model 3, and the target style encoder 303 encodes the font style of the input target domain association character to obtain a target domain style feature.

Optionally, if multiple target domain association characters are input, the target style encoder 303 may first generate a sub-style feature for each target domain association character, and then perform processing (such as mean processing) on each sub-style feature so as to obtain an overall style feature (that is, the target domain style feature) capable of characterizing the target domain.

In step S403, the target domain style feature and the sample character content feature are input into the decoder to obtain the target domain generation character.

Exemplarily, as shown in FIG. 3, both the sample character content feature encoded by the content encoder 301 and the target domain style feature encoded by the target style encoder 303 are input into the decoder 304, and the decoder 304 decodes the target domain style feature and the sample character content feature, and based on decoding results, performs fusion to obtain the target domain generation character (such as the character "你 你" of the handwriting style) having the content of the source domain sample character and the font style of the target domain association character.

In step S404, the target domain generation character and at least one of a target domain sample character or the target domain association character are input into the loss analysis network of the font generation model to obtain the first loss, and a parameter of the font generation model is adjusted according to the first loss.

In step S405, the source domain sample character is input into the content encoder to obtain the sample character content feature.

It should be noted that the specific performing process of this step is the same as the performing process of step S401. When the second stage of training is performed, this step may not be performed. That is, when step S407 is performed, the sample character content feature obtained in S401 is acquired.

In step S406, a random vector is input into the random style encoder to obtain a random domain style feature.

The random domain style feature may be a feature that characterizes the font style of the random domain corresponding to the random vector.

Exemplarily, as shown in FIG. 3, a random vector conforming to a normal distribution is randomly sampled and input into the random style encoder 302 of the font generation network 30 of the font generation model 3, and the random style encoder 302 may obtain the random domain style feature of the random font style corresponding to the random vector through the multilayer perceptual network within the random style encoder 302.

In step S407, the random domain style feature and the sample character content feature are input into the decoder to obtain the random domain generation character.

Exemplarily, as shown in FIG. 3, both the sample character content feature encoded by the content encoder 301 and the random domain style feature encoded by the random style encoder 302 are input into the decoder 304, and the decoder 304 decodes the random domain style feature and the sample character content feature, and based on decoding results, performs fusion to obtain the random domain generation character having the content of the source domain sample character and the font style of the random domain (FIG. 3 does not show the random domain generation character).

In step S408, the random domain generation character and a random domain sample character are input into the loss analysis network to obtain the second loss, and the parameter of the font generation model is readjusted according to the second loss.

In the solution of the embodiment of the present disclosure, when one time of iterative training is performed on a font generation model, the model is not only trained based on a source domain sample character and a target domain association character, moreover, a random vector is input into a random style encoder, and a loss function is recalculated based on a random domain style feature output by the random style encoder to perform a random branch training on the model. At the same time, the impact of the target style character and the random style font on model training is introduced, so that the capability of the font generation model to perform font style transfer is improved, and the accuracy and generalization of the model are improved.

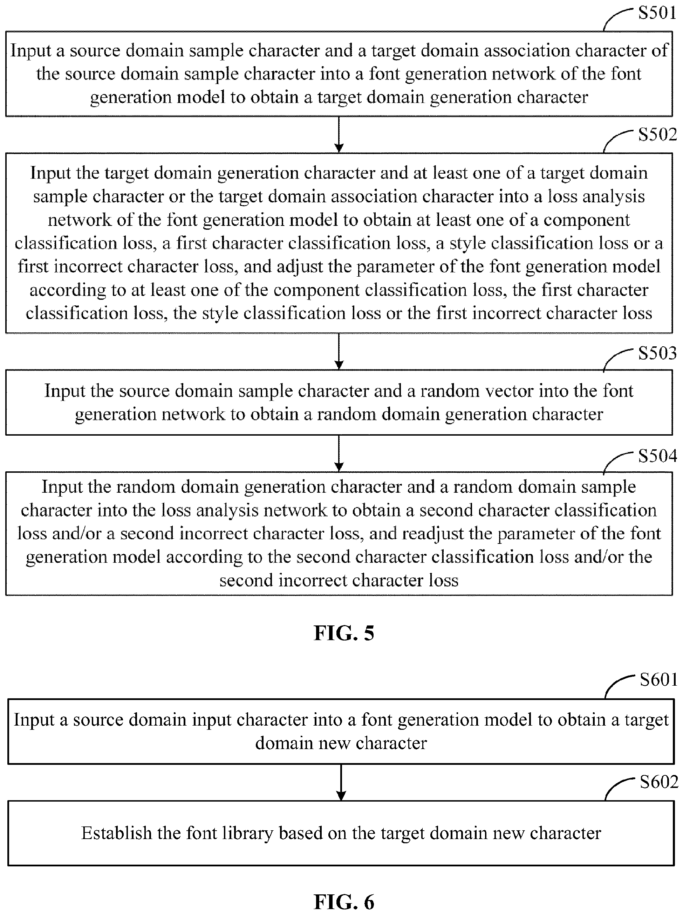

FIG. 5 is a flowchart of a method for training a font generation model according to an embodiment of the present disclosure. Based on the preceding embodiments, the embodiment of the present disclosure further explains in detail how to calculate the first loss and the second loss and how to adjust the parameter of the font generation model based on the first loss and the second loss. As shown in FIGS. 3 and 5, the method for training a font generation model provided by the embodiment may include steps described below.

In step S501, a source domain sample character and a target domain association character of the source domain sample character are input into a font generation network of the font generation model to obtain a target domain generation character.

In step S502, the target domain generation character and at least one of a target domain sample character or the target domain association character are input into a loss analysis network of the font generation model to obtain at least one of a component classification loss, a first character classification loss, a style classification loss or a first incorrect character loss, and the parameter of the font generation model is adjusted according to at least one of the component classification loss, the first character classification loss, the style classification loss or the first incorrect character loss.

Next, the method for calculating each type of loss in step S502 and the process of how to train the model based on the loss are introduced in turn.

First, the process of determining the component classification loss may include steps described below. The target domain association character and the target domain generation character are input into a component classifier to obtain a component vector of the target domain generation character and a component vector of the target domain association character. The component classification loss is determined according to the difference between the component vector of the target domain generation character and the component vector of the target domain association character.

The component vector may be an N-dimensional vector, where N is the number of all components contained in a component table, that is, all radicals. Each element in the component vector represents a component in the component table. If the input character contains the component, the element is the first value (such as 1); if the input character does not contain the component, the element is the second value (such as 0). Therefore, the component classifier may predict whether the input character contains a preset radical (that is, a component) through the generated component vector.

Specifically, in the present embodiment, the target domain association character and the target domain generation character may be input into the component classifier 311, and the component classifier 311 generates an N-dimensional component vector, such as a component vector 1 and a component vector 2, for each input target domain association character and target domain generation character, and then calculates the value of the component classification loss based on the difference between the N-dimensional component vector 1 and the N-dimensional component vector 2. For example, the cross entropy of the two component vectors is calculated as the value of the classification loss. After the value of the component classification loss is calculated, the parameter of the font generation model 3 may be adjusted with the value of the component classification loss as a constraint, so that correct component classification can be performed on characters of all styles through the component classifier 311. In the embodiment, during the process of training the font generation model, the component classification loss is introduced. In this way, it is ensured that correct component classification can be performed on characters of all styles through the component classifier, and further, it is ensured that the target domain generation character retain the component (that is, the component shared by multiple target domain association characters) of the target domain association character.

Second, the process of determining the first character classification loss may include steps described below.

In sub-step A, the target domain sample character and the target domain generation character are input into a character discriminator to obtain a first character loss value of the first character classification loss, and a parameter of the character discriminator is adjusted based on the first character loss value.

Specifically, as shown in FIG. 3, in the sub-step, the target domain sample character and the target domain generation character may be input into the character discriminator 312 to obtain a character classification head position of the target domain generation character and a character classification head position of the target domain sample character, and the first character loss value of the first character classification loss is determined according to the character classification head position of the target domain generation character and the character classification head position of the target domain sample character.

In the embodiment, the training sample may contain images of M (such as 6700) characters. The M characters may constitute an M-dimensional vector, that is, a character classification head vector. Each element in the vector corresponds to a character, and the position of the element in the character classification head vector is the character classification head position. In the embodiment, the character discriminator 312 determines the corresponding character classification head position X for the target domain sample character and the corresponding character classification head position X* for the target domain generation character. The first character loss value of the first character classification loss is calculated based on formula (1) below. After the first character loss value is determined, one time of parameter adjustment is performed on the parameter of the character discriminator 312 based on the first character loss value.

$$L_{adv}^{char}1=(X-1)^2+(X^*-0)^2 \qquad (1).$$

$L_{adv}^{char}1$ represents the first character loss value of the first character classification loss, X represents the character classification head position of the target domain sample character, and X* represents the character classification head position of the target domain generation character.

In sub-step B, the target domain generation character is input into the adjusted character discriminator to obtain a second character loss value of the first character classification loss, and a parameter of the font generation network is adjusted based on the second character loss value.

Specifically, as shown in FIG. 3, in the sub-step, the target domain generation character may be input into the adjusted character discriminator 312 to update the character classification head position of the target domain generation character, and the second character loss value of the first character classification loss is determined according to the updated character classification head position.

In the embodiment, after the parameter of the character discriminator 312 is updated once through sub-step A, the updated character discriminator 312 re-performs the operation of determining the character classification head position of the target domain generation character, that is, updates the character classification head position X*. The second character loss value of the first character classification loss is calculated based on formula (2) below. After the second character loss value is determined, one time of parameter adjustment is performed on the parameter of the font generation network 30 based on the second character loss value.

$$L_{adv}^{char}2=(X^*-1)^2 \qquad (2).$$

$L_{adv}^{char}2$ represents the second character loss value of the first character classification loss, and X* represents the character classification head position of the target domain generation character. It should be noted that X* at this time represents the updated character classification head position of the adjusted character discriminator 312.

In sub-step C, the target domain sample character and the target domain generation character updated based on the adjusted font generation network are input into the adjusted character discriminator to update the first character loss value, and the parameter of the character discriminator is readjusted based on the updated first character loss value.

Specifically, as shown in FIG. 3, in the sub-step, the source domain sample character and the target domain association character may be re-input into the font generation network 30 adjusted after sub-step B to update the target domain generation character, then the updated target domain generation character and the target domain sample character are re-input into the character discriminator 312 adjusted after sub-step A to update the character classification head position X* of the target domain generation character and the character classification head position X of the target domain sample character, the first character loss value is updated based on formula (1), and the parameter of the character discriminator 312 is readjusted based on the updated first character loss value.

In the embodiment, during the process of training the font generation model, the character classification loss is introduced, and the character discriminator 312 and the font generation network 30 are alternatively and iteratively trained, so that the accuracy of the parameter of the font generation network 30 and parameter of the character discriminator 312 is greatly improved.

Third, the process of determining the style classification loss may include steps described below.

In sub-step D, the target domain sample character and the target domain generation character are input into a style discriminator to obtain a first style loss value of the style classification loss, and a parameter of the style discriminator is adjusted based on the first style loss value.

Specifically, as shown in FIG. 3, in the sub-step, the target domain sample character and the target domain generation character may be input into the style discriminator to obtain a style classification head position of the target domain generation character and a style classification head position of the target domain sample character, and the first style loss value of the style classification loss is determined according to the style classification head position of the target domain generation character and the style classification head position of the target domain sample character.

In the embodiment, the training sample may contain S (such as 80) style fonts. The S styles may constitute an S-dimensional vector, that is, a style classification head vector. Each element in the vector corresponds to a style, and the position of the element in the style classification head vector is the style classification head position. In the embodiment, the style discriminator 313 determines the corresponding style classification head position Y for the target domain sample character and the corresponding style classification head position Y* for the target domain generation character. The first style loss value of the style classification loss is calculated based on formula (3) below. After the first style loss value is determined, one time of parameter adjustment is performed on the parameter of the style discriminator 313 based on the first style loss value.

$$L_{adv}^{style}1 = (Y-1)^2 + (Y^*-0)^2 \qquad (3).$$

$L_{adv}^{style}1$ represents the first style loss value of the style classification loss, Y represents the style classification head position of the target domain sample character, and Y* represents the style classification head position of the target domain generation character.

In sub-step E, the target domain generation character is input into the adjusted style discriminator to obtain a second style loss value of the style classification loss, and the parameter of the font generation network is adjusted based on the second style loss value.

Specifically, as shown in FIG. 3, in the sub-step, the target domain generation character may be input into the adjusted style discriminator 313 to update the style classification head position of the target domain generation character, and the second style loss value of the style classification loss is determined according to the updated style classification head position.

In the embodiment, after the parameter of the style discriminator 313 is updated once through sub-step D, the updated style discriminator 313 re-performs the operation of determining the style classification head position of the target domain generation character, that is, updates the style classification head position Y*. The second style loss value of the style classification loss is calculated based on formula (4) below. After the second style loss value is determined, one time of parameter adjustment is performed on the parameter of the font generation network 30 based on the second style loss value.

$$L_{adv}^{style}2 = (Y^*-1)^2 \qquad (4).$$

$L_{adv}^{style}2$ represents the second style loss value of the style classification loss, and Y* represents the style classification head position of the target domain generation character. It should be noted that Y* at this time represents the updated style classification head position of the adjusted style discriminator 313.

In sub-step F, the target domain sample character and the target domain generation character updated based on the adjusted font generation network are input into the adjusted style discriminator to update the first style loss value, and the parameter of the style discriminator is readjusted based on the updated first style loss value.

Specifically, as shown in FIG. 3, in the sub-step, the source domain sample character and the target domain association character may be re-input into the font generation network 30 adjusted after sub-step E to update the target domain generation character, then the updated target domain generation character and the target domain sample character are re-input into the style discriminator 313 adjusted after sub-step D to update the style classification head position Y* of the target domain generation character and the style classification head position Y of the target domain sample character, the first style loss value is updated based on formula (3), and the parameter of the style discriminator 313 is readjusted based on the updated first style loss value.

In the embodiment, during the process of training the font generation model, the style classification loss is introduced, and the style discriminator 313 and the font generation network 30 are alternatively and iteratively trained, so that the accuracy of the parameter of the font generation network 30 and parameter of the style discriminator 313 is greatly improved.

Fourth, the process of determining the first incorrect character loss may include steps described below. The target domain sample character and the target domain generation character are input into the character classifier to obtain a character classification head vector of the target domain sample character and a character classification head vector of the target domain generation character. The first incorrect character loss is determined according to the difference between the character classification head vector of the target domain sample character and the character classification head vector of the target domain generation character.

Specifically, as shown in FIG. 3, the target domain sample character and the target domain generation character are input into the character classifier 314, and the character classifier 314 determines the corresponding character classification head vector $\overline{X}$ satisfying that $\overline{X}=[x_0,x_1 \ldots \ldots x_i \ldots \ldots x_m]$ for the target domain sample character and the corresponding character classification head vector $\overline{Y}$ satisfying that $\overline{Y}=[y_0,y_1 \ldots \ldots y_i \ldots \ldots y_m]$ for the target domain generation character. Each element in the vector $\overline{X}$ and $\overline{Y}$ may represent a character in the training sample, and m represents the number of characters in the training sample. For example, the training sample has 6761 characters, and m may equal to 6760. Then, the first incorrect character loss is calculated according to the difference between the character classification head vector $\overline{X}$ and the character classification head vector $\overline{Y}$. For example, the first incorrect character loss may be calculated according to formula (5) below based on the cross entropy between the character classification head vector $\overline{X}$ and the character classification head vector $\overline{Y}$. After the first incorrect character loss is determined, one time of parameter adjustment is performed on the parameter of the font generation network 30 based on the first incorrect character loss.

$$L_{cls}^{char}=-\mathop{\mathrm{i}}\nolimits_0^n x_i \, log y_i \qquad (5).$$

$L_{cls}^{char}$ represents the first incorrect character loss, $x_i$ represents an element with a subscript of i in the character classification header vector of the target domain sample character, and $y_i$ represents an element with a subscript of i in the character classification header vector of the target domain generation character. i is an integer which is greater than or equal to 0 and is less than or equal to m, and m represents the number of elements in the character classification header vector. In the embodiment, during the process of training the font generation model, the incorrect character loss is introduced to constrain the incorrect character rate of the target domain generation character output by the font generation network 30, thereby reducing the probability of the font generation model generating the incorrect character.

It should be noted that in the embodiment, at least one of the preceding four losses may be generated to adjust the parameter of the font generation model to complete the first stage of training of the font generation model.

In step S503, the source domain sample character and a random vector are input into the font generation network to obtain a random domain generation character.

In step S504, the random domain generation character and a random domain sample character are input into the loss analysis network to obtain a second character classification loss and/or a second incorrect character loss, and the parameter of the font generation model is readjusted according to the second character classification loss and/or the second incorrect character loss.

Next, the method for calculating the second character classification loss and the second incorrect character loss in S504 and the process of how to train the model based on the loss are introduced.

First, the process of determining the second character classification loss may include steps described below.

In sub-step G, the random domain generation character and the random domain sample character are input into the character discriminator to obtain a third character loss value of the second character classification loss, and the parameter of the character discriminator is adjusted based on the third character loss value.

Specifically, as shown in FIG. 3, in the sub-step, the random domain sample character and the random domain generation character may be input into the character discriminator 312 to obtain a character classification head position of the random domain generation character and a character classification head position of the target domain sample character, and the third character loss value of the second character classification loss is determined according to the character classification head position of the random domain generation character and the character classification head position of the random domain sample character. One time of parameter adjustment is performed on the parameter of the character discriminator 312 based on the third character loss value.

It should be noted that the calculation process of the third character loss value is similar to the calculation process of the first character loss value of the first character classification loss, and reference may be made to formula (1) for calculation, as long as the character classification head position of the target domain sample character in formula (1) is changed to the character classification head position of the random domain sample character, and the character classification head position of the target domain generation character in formula (1) is changed to the character classification head position of the random domain generation character.

In sub-step H, the random domain generation character is input into the adjusted character discriminator to obtain a fourth character loss value of the second character classification loss, and the parameter of the font generation network is adjusted based on the fourth character loss value.

Specifically, as shown in FIG. 3, in the sub-step, the random domain generation character may be input into the adjusted character discriminator 312 to update the character classification head position of the random domain generation character, and the fourth character loss value of the second character classification loss is determined according to the updated character classification head position. After the fourth character loss value is determined, one time of parameter adjustment is performed on the parameter of the font generation network 30 based on the fourth character loss value.

It should be noted that the calculation process of the fourth character loss value is similar to the calculation process of the second character loss value of the first character classification loss, and reference may be made to formula (2) for calculation, as long as the character classification head position of the target domain generation character in formula (2) is changed to the character classification head position of the random domain generation character.

In sub-step I, the random domain sample character and the random domain generation character updated based on the adjusted font generation network are input into the adjusted character discriminator to update the third character loss value, and the parameter of the character discriminator is readjusted based on the updated third character loss value.

It should be noted that the process of sub-step I is similar to the process of the preceding sub-step C, and will not be repeated here.

In the embodiment, during the process of training the font generation model, the character classification loss is introduced, and the character discriminator 312 and the font generation network 30 are alternatively and iteratively trained, so that the accuracy of the parameter of the font generation network 30 and parameter of the character discriminator 312 is greatly improved.

Second, the process of determining the second incorrect character loss may include steps described below. The random domain generation character and the random domain sample character are input into the character classifier to obtain a character classification head vector of the random domain generation character and a character classification head vector of the random domain sample character. The second incorrect character loss is determined according to the difference between the character classification head vector of the random domain generation character and the character classification head vector of the target domain sample character.

It should be noted that the process of determining the second incorrect character loss is similar to the preceding process of determining the first incorrect character loss, and will not be repeated here. In the embodiment, during the process of training the font generation model, the incorrect character loss is introduced to constrain the incorrect character rate of the target domain generation character output by the font generation network 30, thereby reducing the probability of the font generation model generating the incorrect character.

It should further be noted that for ease of differentiation, the embodiment uses the parameter with * to indicate that the parameter is associated with the model-generated image and the parameter without * to indicate that the parameter is associated with the actual image.

It should further be noted that in the embodiment, at least one of the preceding two losses may be generated to adjust the parameter of the font generation model to complete the second stage of training of the font generation model.

In the solution of the embodiment of the present disclosure, multiple types of losses are introduced to the process of training the font generation module. The training of model is jointly constrained by the multiple types of losses, so that the accuracy of model training is greatly improved.

FIG. 6 is a flowchart of a method for establishing a font library according to an embodiment of the present disclosure. The embodiment of the present disclosure is applicable to the case of constructing a font library based on the font generation model trained in the preceding embodiments. The method may be performed by an apparatus for establishing a font library. The apparatus may be implemented by means of software and/or hardware. As shown in FIG. 6, the method for establishing a font library provided by the embodiment may include steps described below.

In step S601, a source domain input character is input into a font generation model to obtain a target domain new character.

The font generation model may be a font generation model trained on the basis of the preceding embodiments.

For example, the source domain input character is an image of a character of the Song font, and the new character is an image of a character of the handwriting style. The image of the character of the Song font is input into the font generation model, and the image of the character of the handwriting style can be obtained.

In step S602, the font library is established based on the target domain new character.

In the embodiment, the new character generated by the font generation model may be stored, and a font library having the handwriting font style is established. The font library may be applied to an input method, and a user can directly obtain characters of the handwriting font style by using the input method based on the font library. In this way, diverse requirements of the user are satisfied, and the user experience is improved.

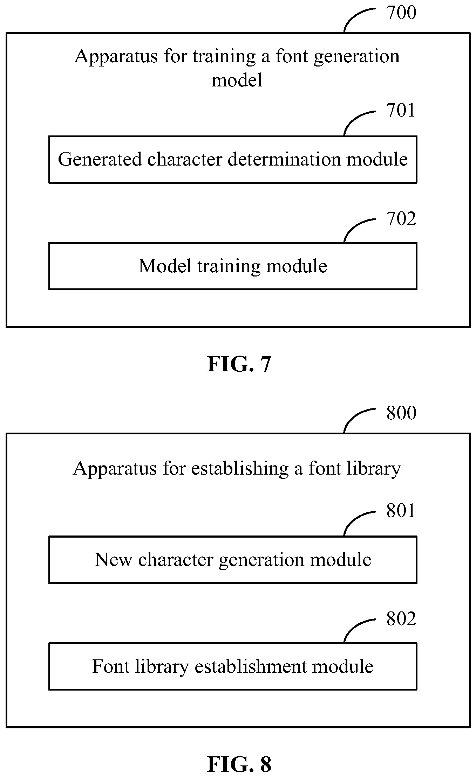

FIG. 7 is a structural diagram of an apparatus for training a font generation model according to an embodiment of the present disclosure. The embodiment of the present disclosure is applicable to the case of training a font generation model for performing the task of font style transfer, and in particular, to the case of training a font generation model for performing the task of font style transfer based on a small amount of sample data. The apparatus may be implemented by software and/or hardware, and the apparatus can implement the method for training a font generation model of any embodiment of the present disclosure. As shown in FIG. 7, the apparatus for training a font generation model includes a generated character determination module 701 and a model training module 702.

The generated character determination module 701 is configured to input a source domain sample character and a target domain association character of the source domain sample character into a font generation network of the font generation model to obtain a target domain generation character.

The model training module 702 is configured to input the target domain generation character and at least one of a target domain sample character or the target domain association character into a loss analysis network of the font generation model to obtain a first loss, and adjust a parameter of the font generation model according to the first loss.

The generated character determination module 701 is further configured to input the source domain sample character and a random vector into the font generation network to obtain a random domain generation character.

acter.

The model training module 702 is further configured to input the random domain generation character and a random domain sample character into the loss analysis network to obtain a second loss, and readjust the parameter of the font generation model according to the second loss.

In the solution of the embodiment of the present disclosure, one time of iterative training performed on a font generation model includes a target branch training stage performed on the model based on a source domain sample character and a target domain association character and a random branch training stage performed on the model based on the source domain sample character and a random vector. The random branch training stage is introduced, so that the capability of the font generation model to perform font style transfer is improved. When a small amount of target domain sample data is provided, or the source domain font does not conform to the font distribution style, the beautiful and correct font still can be generated, so that the accuracy and generalization of the model are improved. In this way, a new idea is provided for training a font generation model with a small amount of sample data.

Further, the preceding font generation network includes a content encoder, a random style encoder, a target style encoder and a decoder.

Further, the preceding generated character determination module 701 is specifically configured to performed steps described below.

The source domain sample character is input into the content encoder to obtain a sample character content feature.

The random vector is input into the random style encoder to obtain a random domain style feature.

The random domain style feature and the sample character content feature are input into the decoder to obtain the random domain generation character.

Further, the preceding generated character determination module 701 is further specifically configured to performed steps described below.

The source domain sample character is input into the content encoder to obtain a sample character content feature.

The target domain association character of the source domain sample character is input into the target style encoder to obtain a target domain style feature.

The target domain style feature and the sample character content feature are input into the decoder to obtain the target domain generation character.

Further, the preceding loss analysis network includes: at least one of a component classifier, a character discriminator, a style discriminator or a character classifier; the first loss includes: at least one of a component classification loss, a first character classification loss, a style classification loss or a first incorrect character loss; and the second loss includes: a second character classification loss and/or a second incorrect character loss.

Further, the preceding model training module 702 includes a first character loss calculation unit, a character discriminator adjustment unit, a second character loss calculation unit and a font generation network adjustment unit.

The first character loss calculation unit is configured to input the target domain sample character and the target domain generation character into the character discriminator to obtain a first character loss value of the first character classification loss.

The character discriminator adjustment unit is configured to adjust a parameter of the character discriminator based on the first character loss value.

The second character loss calculation unit is configured to input the target domain generation character into the adjusted character discriminator to obtain a second character loss value of the first character classification loss.

The font generation network adjustment unit is configured to adjust a parameter of the font generation network based on the second character loss value.

The first character loss calculation unit is further configured to input the target domain sample character and a target domain generation character updated based on the adjusted font generation network into the adjusted character discriminator to update the first character loss value.

The character discriminator adjustment unit is further configured to readjust the parameter of the character discriminator based on the updated first character loss value.

Further, the preceding first character loss calculation unit is specifically configured to perform steps described below.

The target domain sample character and the target domain generation character are input into the character discriminator to obtain a character classification head position of the target domain generation character and a character classification head position of the target domain sample character.

The first character loss value of the first character classification loss is determined according to the character classification head position of the target domain generation character and the character classification head position of the target domain sample character.

Further, the preceding second character loss calculation unit is specifically configured to perform steps described below.

The target domain generation character is input into the adjusted character discriminator to update a character classification head position of the target domain generation character.

The second character loss value of the first character classification loss is determined according to the updated character classification head position.

Further, the preceding model training module 702 further includes a first style loss calculation unit, a style discriminator adjustment unit, a second style loss calculation unit and the font generation network adjustment unit.

The first style loss calculation unit is configured to input the target domain sample character and the target domain generation character into the style discriminator to obtain a first style loss value of the style classification loss.

The style discriminator adjustment unit is configured to adjust a parameter of the style discriminator based on the first style loss value.

The second style loss calculation unit is configured to input the target domain generation character into the adjusted style discriminator to obtain a second style loss value of the style classification loss.

The font generation network adjustment unit is configured to adjust the parameter of the font generation network based on the second style loss value.

The first style loss calculation unit is further configured to input the target domain sample character and a target domain generation character updated based on the adjusted font generation network into the adjusted style discriminator to update the first style loss value.

The style discriminator adjustment unit is further configured to readjust the parameter of the style discriminator based on the updated first style loss value.

Further, the preceding first style loss calculation unit is specifically configured to perform steps described below.

The target domain sample character and the target domain generation character are input into the style discriminator to obtain a style classification head position of the target domain generation character and a style classification head position of the target domain sample character.

The first style loss value of the style classification loss is determined according to the style classification head position of the target domain generation character and the style classification head position of the target domain sample character.

Further, the preceding second style loss calculation unit is specifically configured to perform steps described below.

The target domain generation character is input into the adjusted style discriminator to update a style classification head position of the target domain generation character.

The second style loss value of the style classification loss is determined according to the updated style classification head position.

Further, the preceding model training module 702 further includes a third character loss calculation unit, the character discriminator adjustment unit, a fourth character loss calculation unit and the font generation network adjustment unit.

The third character loss calculation unit is configured to input the random domain generation character and the random domain sample character into the character discriminator to obtain a third character loss value of the second character classification loss.

The character discriminator adjustment unit is configured to adjust the parameter of the character discriminator based on the third character loss value.

The fourth character loss calculation unit is configured to input the random domain generation character into the adjusted character discriminator to obtain a fourth character loss value of the second character classification loss.

The font generation network adjustment unit is configured to adjust the parameter of the font generation network based on the fourth character loss value.

The third character loss calculation unit is further configured to input the random domain sample character and a random domain generation character updated based on the adjusted font generation network into the adjusted character discriminator to update the third character loss value.

The character discriminator adjustment unit is further configured to readjust the parameter of the character discriminator based on the updated third character loss value.

Further, the preceding model training module 702 further includes a component classification loss calculation unit.

The component classification loss calculation unit is configured to input the target domain association character and the target domain generation character into the component classifier to obtain a component vector of the target domain generation character and a component vector of the target domain association character, and determine the component classification loss according to the difference between the component vector of the target domain generation character and the component vector of the target domain association character.

Further, the preceding model training module 702 further includes a first incorrect character loss calculation unit.

Fourth, the first incorrect character loss calculation unit is configured to input the target domain sample character and the target domain generation character into the character classifier to obtain a character classification head vector of the target domain sample character and a character classification head vector of the target domain generation character, and determine the first incorrect character loss according to the difference between the character classification head vector of the target domain sample character and the character classification head vector of the target domain generation character.

Further, the preceding model training module 702 further includes a second incorrect character loss calculation unit.

The second incorrect character loss calculation unit is configured to input the random domain generation character and the random domain sample character into the character classifier to obtain a character classification head vector of the random domain generation character and a character classification head vector of the random domain sample character, and determine the second incorrect character loss according to the difference between the character classification head vector of the random domain generation character and the character classification head vector of the random domain sample character.

FIG. 8 is a structural diagram of an apparatus for establishing a font library according to an embodiment of the present disclosure. The embodiment of the present disclosure is applicable to the case of constructing a font library based on the font generation model trained in the preceding embodiments. The apparatus may be implemented by software and/or hardware, and the apparatus can implement the method for establishing a font library of any embodiment of the present disclosure. As shown in FIG. 8, the apparatus for establishing a font library includes a new character generation module 801 and a font library establishment module 802.

The new character generation module 801 is configured to input a source domain input character into a font generation model to obtain a target domain new character.

The font library establishment module 802 is configured to establish the font library based on the target domain new character.

The font generation model is obtained by training according to the method for training a font generation model of any embodiment of the present disclosure.

In the embodiment, the new character generated by the font generation model may be stored, and a font library having the handwriting font style is established. The font library may be applied to an input method, and a user can directly obtain characters of the handwriting font style by using the input method based on the font library. In this way, diverse requirements of the user are satisfied, and the user experience is improved.

The preceding products may perform the method provided by any embodiment of the present disclosure, and has functional modules and beneficial effects corresponding to the performed method.

It should be noted that in the technical solutions of the present disclosure, the collection, storage, use, processing, transmission, provision, and disclosure of font images involved are in compliance with provisions of relevant laws and regulations, and do not violate public order and good customs.

According to the embodiments of the present disclosure, the present disclosure further provides an electronic device, a readable storage medium and a computer program product.

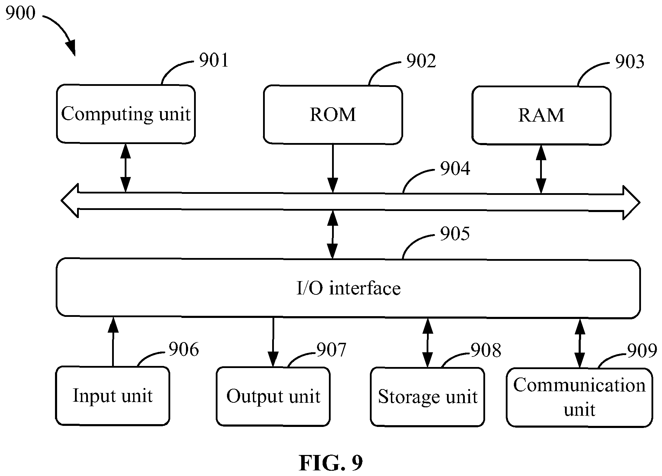

FIG. 9 is a block diagram of an exemplary electronic device 900 that may be configured to implement the embodiments of the present disclosure. Electronic devices are intended to represent various forms of digital computers, for example, laptop computers, desktop computers, worktables, personal digital assistants, servers, blade servers, mainframe computers and other applicable computers. The electronic devices may further represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 9, the device 900 includes a computing unit 901. The computing unit 901 may perform various types of appropriate operations and processing based on a computer program stored in a read-only memory (ROM) 902 or a computer program loaded from a storage unit 908 to a random-access memory (RAM) 903. Various programs and data required for operations of the device 900 may also be stored in the RAM 903. The computing unit 901, the ROM 902 and the RAM 903 are connected to each other through a bus 904. An input/output (I/O) interface 905 is also connected to the bus 904.

Multiple components in the device 900 are connected to the I/O interface 905. The components include an input unit 906 such as a keyboard and a mouse, an output unit 907 such as various types of displays and speakers, the storage unit 908 such as a magnetic disk and an optical disc, and a communication unit 909 such as a network card, a modem and a wireless communication transceiver. The communication unit 909 allows the device 900 to exchange information/data with other devices over a computer network such as the Internet and/or various telecommunications networks.

The computing unit 901 may be various general-purpose and/or special-purpose processing components having processing and computing capabilities. Examples of the computing unit 901 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller and microcontroller. The computing unit 901 performs various methods and processing described above, such as the method for training a font generation model and/or the method for establishing a font library. For example, in some embodiments, the method for training a font generation model and/or the method for establishing a font library may be implemented as a computer software program tangibly contained in a machine-readable medium such as the storage unit 908. In some embodiments, part or all of computer programs may be loaded and/or installed on the device 900 via the ROM 902 and/or the communication unit 909. When the computer programs are loaded into the RAM 903 and performed by the computing unit 901, one or more steps of the preceding method for training a font generation model and/or the method for establishing a font library may be performed. Alternatively, in other embodiments, the computing unit 901 may be configured, in any other suitable manner (for example, by means of firmware), to perform the method for training a font generation model and/or the method for establishing a font library.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for implementing the methods of the present disclosure may be compiled in any combination of one or more programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disk read-only memory (CD-ROM), an optical memory device, a magnetic memory device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. The clients and servers are usually far away from each other and generally interact through the communication network. The relationship between the clients and the servers arises by virtue of computer programs running on respective computers and having a client-server relationship to each other. The server may be a cloud server, also referred to as a cloud computing server or a cloud host. As a host product in a cloud computing service system, the server solves the defects of difficult management and weak business scalability in conventional physical hosts and VPS services. The server may also be a server of a distributed system, or a server combined with a blockchain.

Artificial intelligence is the study of making computers simulate certain human thinking processes and intelligent behaviors (such as learning, reasoning, thinking and planning) both at the hardware and software levels. Artificial intelligence hardware technologies generally include technologies such as sensors, special-purpose artificial intelligence chips, cloud computing, distributed storage and big data processing. Artificial intelligence software technologies mainly include several major technologies such as computer vision technologies, speech recognition technologies, natural language processing technologies, machine learning/deep learning technologies, big data processing technologies and knowledge mapping technologies.

Cloud computing refers to a technical architecture that accesses an elastic-and-scalable shared physical or virtual resource pool through a network, where resources may include servers, operating systems, networks, software, applications and storage devices, and may be deployed and managed in an on-demand, self-service manner. Cloud computing can provide efficient and powerful data processing capabilities for artificial intelligence, the blockchain and other technical applications and model training.

It is to be understood that various forms of the preceding flows may be used with steps reordered, added, or removed. For example, the steps described in the present disclosure may be executed in parallel, in sequence or in a different order as long as the desired result of the technical solutions disclosed in the present disclosure is achieved. The execution sequence of these steps is not limited herein.

**Claims**

1. A method for training a font generation model, comprising:

    inputting (S201, S501) a source domain sample character and a target domain association character of the source domain sample character into a font generation network of the font generation model to obtain a target domain generation character;
    inputting (S202, S404) the target domain generation character and at least one of a target domain sample character or the target domain association character into a loss analysis network of the font generation model to obtain a first loss, and adjusting a parameter of the font generation model according to the first loss;
    inputting (S203, S503) the source domain sample character and a random vector into the font generation network to obtain a random domain generation character; and
    inputting (S204, S408, S504) the random domain generation character and a random domain sample character into the loss analysis network to obtain a second loss, and readjusting the parameter of the font generation model according to the second loss.

2. The method according to claim 1, wherein the font generation network comprises: a content encoder, a random style encoder, a target style encoder and a decoder.

3. The method according to claim 2, wherein inputting the source domain sample character and the random vector into the font generation network to obtain the random domain generation character comprises:

    inputting (S401, S405) the source domain sample character into the content encoder to obtain a sample character content feature;

inputting (S406) the random vector into the random style encoder to obtain a random domain style feature; and

inputting (S407) the random domain style feature and the sample character content feature into the decoder to obtain the random domain generation character.

4. The method according to claim 2, wherein inputting the source domain sample character and the target domain association character of the source domain sample character into the font generation network of the font generation model to obtain the target domain generation character comprises:

inputting (S401, S405) the source domain sample character into the content encoder to obtain a sample character content feature;

inputting (S402) the target domain association character of the source domain sample character into the target style encoder to obtain a target domain style feature; and

inputting (S403) the target domain style feature and the sample character content feature into the decoder to obtain the target domain generation character.

5. The method according to claim 1, wherein

the loss analysis network comprises at least one of a component classifier, a character discriminator, a style discriminator or a character classifier;

the first loss comprises at least one of a component classification loss, a first character classification loss, a style classification loss or a first incorrect character loss; and

the second loss comprises at least one of a second character classification loss or a second incorrect character loss.

6. The method according to claim 5, wherein inputting (S202, S404) the target domain generation character and the at least one of the target domain sample character or the target domain association character into the loss analysis network of the font generation model to obtain the first loss, and adjusting the parameter of the font generation model according to the first loss comprises:

inputting (S502) the target domain sample character and the target domain generation character into the character discriminator to obtain a first character loss value of the first character classification loss, and adjusting a parameter of the character discriminator based on the first character loss value to obtain an adjusted character discriminator;

inputting the target domain generation character into the adjusted character discriminator to obtain a second character loss value of the first character classification loss, and adjusting a parameter of the font generation network based on the second character loss value to obtain an adjusted font generation network; and

inputting the target domain sample character and a target domain generation character updated based on the adjusted font generation network into the adjusted character discriminator to update the first character loss value, and readjusting the parameter of the character discriminator based on the updated first character loss value.

7. The method according to claim 6, wherein inputting the target domain sample character and the target domain generation character into the character discriminator to obtain the first character loss value of the first character classification loss comprises:

inputting the target domain sample character and the target domain generation character into the character discriminator to obtain a character classification head position of the target domain generation character and a character classification head position of the target domain sample character; and

determining the first character loss value of the first character classification loss according to the character classification head position of the target domain generation character and the character classification head position of the target domain sample character.

8. The method according to claim 6, wherein inputting the target domain generation character into the adjusted character discriminator to obtain the second character loss value of the first character classification loss comprises:

inputting the target domain generation character into the adjusted character discriminator to update a character classification head position of the target domain generation character; and

determining the second character loss value of the first character classification loss according to the updated character classification head position.

9. The method according to claim 5, wherein inputting the target domain generation character and the at least one of the target domain sample character or the target domain association character into the loss analysis network of the font generation model to obtain the first loss, and adjusting the parameter of the font generation model according to the first loss comprises:

inputting the target domain sample character and the target domain generation character into the style discriminator to obtain a first style loss value of the style classification loss, and adjusting a parameter of the style discriminator based on the first style loss value to obtain an adjusted style discriminator;
inputting the target domain generation character into the adjusted style discriminator to obtain a second style loss value of the style classification loss, and adjusting a parameter of the font generation network based on the second style loss value to obtain an adjusted font generation network; and
inputting the target domain sample character and a target domain generation character updated based on the adjusted font generation network into the adjusted style discriminator to update the first style loss value, and readjusting the parameter of the style discriminator based on the updated first style loss value.

10. The method according to claim 9, wherein inputting the target domain sample character and the target domain generation character into the style discriminator to obtain the first style loss value of the style classification loss comprises:

inputting the target domain sample character and the target domain generation character into the style discriminator to obtain a style classification head position of the target domain generation character and a style classification head position of the target domain sample character; and
determining the first style loss value of the style classification loss according to the style classification head position of the target domain generation character and the style classification head position of the target domain sample character.

11. The method according to claim 9, wherein inputting the target domain generation character into the adjusted style discriminator to obtain the second style loss value of the style classification loss comprises:

inputting the target domain generation character into the adjusted style discriminator to update a style classification head position of the target domain generation character; and
determining the second style loss value of the style classification loss according to the updated style classification head position.

12. The method according to claim 5, wherein inputting the random domain generation character and the random domain sample character into the loss analysis network to obtain the second loss, and readjusting the parameter of the font generation model according to the second loss comprises:

inputting the random domain generation character and the random domain sample character into the character discriminator to obtain a third character loss value of the second character classification loss, and adjusting a parameter of the character discriminator based on the third character loss value;
inputting the random domain generation character into the adjusted character discriminator to obtain a fourth character loss value of the second character classification loss, and adjusting a parameter of the font generation network based on the fourth character loss value; and
inputting the random domain sample character and a random domain generation character updated based on the adjusted font generation network into the adjusted character discriminator to update the third character loss value, and readjusting the parameter of the character discriminator based on the updated third character loss value.

13. The method according to claim 5, wherein inputting the target domain generation character and the at least one of the target domain sample character or the target domain association character into the loss analysis network of the font generation model to obtain the first loss comprises:

inputting the target domain association character and the target domain generation character into the component classifier to obtain a component vector of the target domain generation character and a component vector of the target domain association character; and
determining the component classification loss according to a difference between the component vector of the target domain generation character and the component vector of the target domain association character.

14. The method according to claim 5, wherein inputting the target domain generation character and the at least one of the target domain sample character or the target domain association character into the loss analysis network of the font generation model to obtain the first loss comprises:

inputting the target domain sample character and the target domain generation character into the character classifier to obtain a character classification head vector of the target domain sample character and a character classification head vector of the target domain generation character; and

determining the first incorrect character loss according to a difference between the character classification head vector of the target domain sample character and the character classification head vector of the target domain generation character.

15. The method according to claim 5, wherein inputting the random domain generation character and the random domain sample character into the loss analysis network to obtain the second loss comprises:

inputting the random domain generation character and the random domain sample character into the character classifier to obtain a character classification head vector of the random domain generation character and a character classification head vector of the random domain sample character; and

determining the second incorrect character loss according to a difference between the character classification head vector of the random domain generation character and the character classification head vector of the random domain sample character.

16. A method for establishing a font library, comprising:

inputting (S601) a source domain input character into a font generation model to obtain a target domain new character; and

establishing (S602) the font library based on the target domain new character;

wherein the font generation model is obtained by training according to the method of any one of claims 1 to 15.

17. An apparatus (700) for training a font generation model, comprising:

a generated character determination module (701), which is configured to input a source domain sample character and a target domain association character of the source domain sample character into a font generation network of the font generation model to obtain a target domain generation character; and

a model training module (702), which is configured to input the target domain generation character and at least one of a target domain sample character or the target domain association character into a loss analysis network of the font generation model to obtain a first loss, and adjust a parameter of the font generation model according to the first loss; wherein

the generated character determination module (701) is further configured to input the source domain sample character and a random vector into the font generation network to obtain a random domain generation character; and

the model training module (702) is further configured to input the random domain generation character and a random domain sample character into the loss analysis network to obtain a second loss, and readjust the parameter of the font generation model according to the second loss.

18. An apparatus (800) for establishing a font library, comprising:

a new character generation module (801), which is configured to input a source domain input character into a font generation model to obtain a target domain new character; and

a font library establishment module (802), which is configured to establish the font library based on the target domain new character;

wherein the font generation model is obtained by training according to the method of any one of claims 1 to 15.

19. An electronic device, comprising:

at least one processor; and

a memory communicatively connected to the at least one processor;

wherein the memory stores instructions executable by the at least one processor, and the instructions are executed by the at least one processor to cause the at least one processor to perform the method for training a font generation model of any one of claims 1 to 15, and/or perform the method for establishing a font library of claim 16.

20. A computer-readable storage medium storing computer instructions for causing a computer to perform the method for training a font generation model of any one of claims 1 to 15, and/or perform the method for establishing a font library of claim 16.

21. A computer program product, comprising a computer program which, when executed by a processor, implements the method for training a font generation model of any one of claims 1 to 15, and/or implements the method for establishing a font library of claim 16.

**FIG. 1**

S201

Input a source domain sample character and a target domain association character of the source domain sample character into a font generation network of the font generation model to obtain a target domain generation character

S202

Input the target domain generation character and at least one of a target domain sample character or the target domain association character into the loss analysis network of the font generation model to obtain a first loss, and adjust a parameter of the font generation model according to the first loss

S203

Input the source domain sample character and a random vector into the font generation network to obtain a random domain generation character

S204

Input the random domain generation character and a random domain sample character into the loss analysis network to obtain a second loss, and readjust the parameter of the font generation model according to the second loss

**FIG. 2A**

Random vector

Target/random domain sample character

Target domain association character

Source domain sample character

2

Font generation network

20

Target/random domain generation character

21

Loss analysis network

**FIG. 2B**

**FIG. 3**

```
                                                                    ┌─ S401
┌────────────────────────────────────────────────────────────────────┐
│ Input the source domain sample character into the content encoder    │
│ network to obtain a sample character content feature                 │
└────────────────────────────────────────────────────────────────────┘
                                    │
                                    ▼                               ┌─ S402
┌────────────────────────────────────────────────────────────────────┐
│ Input the target domain association character of the source domain    │
│ sample character into the target style encoder to obtain a target    │
│ domain style feature                                                 │
└────────────────────────────────────────────────────────────────────┘
                                    │
                                    ▼                               ┌─ S403
┌────────────────────────────────────────────────────────────────────┐
│ Input the target domain style feature and the sample character       │
│ content feature into the decoder to obtain the target domain         │
│ generation character                                                 │
└────────────────────────────────────────────────────────────────────┘
                                    │
                                    ▼                               ┌─ S404
┌────────────────────────────────────────────────────────────────────┐
│ Input the target domain generation character and at least one of a   │
│ target domain sample character or the target domain association      │
│ character into the loss analysis network of the font generation      │
│ model to obtain the first loss, and adjust a parameter of the font   │
│ generation model according to the first loss                         │
└────────────────────────────────────────────────────────────────────┘
                                    │
                                    ▼                               ┌─ S405
┌────────────────────────────────────────────────────────────────────┐
│ Input the source domain sample character into the content encoder to │
│ obtain the sample character content feature                          │
└────────────────────────────────────────────────────────────────────┘
                                    │
                                    ▼                               ┌─ S406
┌────────────────────────────────────────────────────────────────────┐
│ Input a random vector into the random style encoder to obtain a      │
│ random domain style feature                                          │
└────────────────────────────────────────────────────────────────────┘
                                    │
                                    ▼                               ┌─ S407
┌────────────────────────────────────────────────────────────────────┐
│ Input the random domain style feature and the sample character       │
│ content feature into the decoder to obtain the random domain         │
│ generation character                                                 │
└────────────────────────────────────────────────────────────────────┘
                                    │
                                    ▼                               ┌─ S408
┌────────────────────────────────────────────────────────────────────┐
│ Input the random domain generation character and a random domain     │
│ sample character into the loss analysis network to obtain the        │
│ second loss, and the parameter of the font generation model is       │
│ readjusted according to the second loss                              │
└────────────────────────────────────────────────────────────────────┘
```

**FIG. 4**

S501

Input a source domain sample character and a target domain association character of the source domain sample character into a font generation network of the font generation model to obtain a target domain generation character

S502

Input the target domain generation character and at least one of a target domain sample character or the target domain association character into a loss analysis network of the font generation model to obtain at least one of a component classification loss, a first character classification loss, a style classification loss or a first incorrect character loss, and adjust the parameter of the font generation model according to at least one of the component classification loss, the first character classification loss, the style classification loss or the first incorrect character loss

S503

Input the source domain sample character and a random vector into the font generation network to obtain a random domain generation character

S504

Input the random domain generation character and a random domain sample character into the loss analysis network to obtain a second character classification loss and/or a second incorrect character loss, and readjust the parameter of the font generation model according to the second character classification loss and/or the second incorrect character loss

**FIG. 5**

S601

Input a source domain input character into a font generation model to obtain a target domain new character

S602

Establish the font library based on the target domain new character

**FIG. 6**

700

┌─────────────────────────────────────────────────┐
│ Apparatus for training a font generation         │
│ model                                            │
│                                            701   │
│ ┌─────────────────────────────────────────────┐ │
│ │ Generated character determination module    │ │
│ └─────────────────────────────────────────────┘ │
│                                            702   │
│ ┌─────────────────────────────────────────────┐ │
│ │          Model training module              │ │
│ └─────────────────────────────────────────────┘ │
└─────────────────────────────────────────────────┘

**FIG. 7**

800

┌─────────────────────────────────────────────────┐
│ Apparatus for establishing a font library        │
│                                            801   │
│ ┌─────────────────────────────────────────────┐ │
│ │        New character generation module       │ │
│ └─────────────────────────────────────────────┘ │
│                                            802   │
│ ┌─────────────────────────────────────────────┐ │
│ │      Font library establishment module       │ │
│ └─────────────────────────────────────────────┘ │
└─────────────────────────────────────────────────┘

**FIG. 8**

900

901 Computing unit

902 ROM

903 RAM

904

905 I/O interface

906 Input unit

907 Output unit

908 Storage unit

909 Communication unit

**FIG. 9**